# FASCICULE DE BREVET EUROPEEN

(11) **EP 0 553 584 B1**
(45) Date de publication et mention de la délivrance du brevet: **24.04.1996**
(21) Numéro de dépôt: 92403576.9
(22) Date de dépôt: 29.12.1992
(51) Int. Cl.: F16D 3/41

(54) **Douille en cuvette perfectionnée pour roulement radial et son application à un joint de cardan**
Geschlossene Hülse für Radiallager und deren Benutzung in einem Kardangelenk
Closed sleeve for radial bearing and its use in a cardan joint

(30) Priorité: 31.01.1992 FR 9201122
(43) Date de publication de la demande: 04.08.1993
(73) Titulaire: NADELLA, F-18102 Vierzon (FR)
(72) Inventeur: Labedan, Jean-Denis, F-18000 Bourges (FR)
(74) Mandataire: Polus, Camille

(56) Documents cités:
- DE-B- 1 021 211
- DE-B- 2 947 395
- DE-U- 8 714 948
- FR-A- 1 585 955
- FR-A- 2 242 003
- PATENT ABSTRACTS OF JAPAN vol. 4, no. 33 (M-003)(515) 21 Mars 1980 & JP-A-55 006 040

## Description

La présente invention concerne les coussinets éléments roulants cylindriques et, plus particulièrement, une douille perfectionnée en cuvette pour roulement radial à éléments roulants cylindriques qui trouve une application notamment pour des joints de cardan utilisés, par exemple, pour les colonnes de direction d'automobiles.

Comme on le sait, le montage des croisillons dans les mâchoires d'un joint de cardan se fait, habituellement, à l'aide de coussinets ou de roulements radiaux à éléments roulants cylindriques interposés entre les tourillons des croisillons et les alésages ou logements des mâchoires.

Il est connu que le bon fonctionnement d'un joint de cardan résulte en particulier d'un montage du croisillon dans les mâchoires pratiquement exempt de tout jeu axial relatif entre les tourillons des croisillons et les logements de chaque mâchoire. En particulier, lorsqu'on équipe un tel joint de cardan de coussinets ou roulements radiaux qui comprennent une douille ou similaire en cuvette à fond fermé, tout jeu axial entre la tranche d'extrémité d'un tourillon de croisillon et le fond en vis-à-vis de la douille en cuvette est préjudiciable. En effet, un tel jeu est générateur de bruits de fonctionnement par exemple par claquement ou produit des oscillations longitudinales habituellement appelées "pompage" qui donnent au croisillon ,et donc à l'autre mâchoire qu'il porte, une position décalée par rapport à la position théorique qui assure un centrage correct; une telle position décalée nuit donc à l'équilibrage dynamique de l'arbre relié à cette autre mâchoire qui se décale. Tout ceci nuit aussi à l'étanchéité des coussinets ou roulements radiaux.

Pour tenter de remédier à ce type de difficultés, diverses solutions ont été imaginées.

On a proposé de faire en sorte que la douille ou coussinet soit soumise à une précontrainte axiale selon l'axe des tourillons des croisillons du joint de cardan. Pour exercer cette précontrainte, on a proposé d'appliquer le fond de la douille contre la tranche du tourillon en utilisant l'élasticité du joint d'étanchéité intercalé entre le tourillon et la douille à l'extrémité de celle-ci opposée au fond. On a aussi proposé d'utiliser la déformation élastique du fond d'une telle douille appliqué directement au contact contre la tranche du tourillon. On a aussi proposé d'utiliser une pièce intermédiaire plus ou moins élastique ou plastique interposée entre le fond de la douille et la tranche du tourillon. On a aussi proposé de déformer le fond de la douille au-delà de sa limite élastique pour le déformer plastiquement et mettre en oeuvre l'élasticité résiduelle.

Des exemples de ces types de solutions sont, par exemple, exposés dans les documents FR 2 203 462, 2 231 261, 2 242 003, 2 459 899.

Toutefois, aucune de ces solutions n'est totalement satisfaisante soit pour des raisons de coût, soit pour des raisons de difficultés de mise en oeuvre technique. En particulier, pour la solution selon le document FR 2 242 003 qui fait appel à une déformation plastique au-delà de la limite élastique afin de tirer partie de l'élasticité résiduelle, la mise en oeuvre utilise habituellement un poinçon unique pour (1) produire la déformation plastique du fond de la douille, (2) placer la douille dans son logement et (3) sertir la douille sur la mâchoire.

Une autre solution est exposée dans le document DE 1 021 211. La solution selon ce document utilise une douille qui est durcie dans sa partie qui sert de chemin de roulement aux éléments roulants d'une manière telle que le fond est soumis à des efforts de cisaillement dans une zone pratiquement inélastique.

Le but de l'invention est de résoudre notamment les difficultés brièvement rappelées à l'aide d'une douille perfectionnée en cuvette pour coussinet ou roulement radial à éléments roulants cylindriques utilisables, notamment, pour les paliers des croisillons de joints de cardan, par exemple pour colonnes de direction d'automobile.

L'invention a pour objet une douille en cuvette métallique traitée pour roulement radial à éléments roulants cylindriques d'un type et de particularités exposés notamment dans la revendication 1.

L'invention a aussi pour objet l'application d'une telle douille pour le montage des croisillons dans les mâchoires d'un joint de cardan, notamment pour direction d'automobile.

D'autres caractéristiques de l'invention ressortiront de la lecture de la description et des revendications qui suivent ainsi que de l'examen du dessin annexé, donné seulement à titre d'exemple, où :
- les Figures 1A et 1B illustrent en demi-coupes méridiennes partielles une douille perfectionnée selon l'invention en cours de montage et en fin de montage; et
- les Figures 2A et 2B sont des vues analogues à celles de la Figure 1 d'une autre variante d'exécution.

Les coussinets ou roulements à éléments roulants cylindriques utilisés notamment pour le montage des croisillons dans les mâchoires des joints de cardan étant bien connus dans la technique, de même que leur utilisation notamment pour les colonnes de direction d'automobiles étant bien connus dans la technique, on ne décrira dans ce qui suit que ce qui concerne directement ou indirectement l'invention. Pour le surplus, l'homme du métier considéré puisera dans les solutions classiques courantes à sa disposition pour faire face aux problèmes particuliers auxquels il est confronté.

Dans ce qui suit, un même numéro de référence identifie toujours un même élément homologue, quel que soit le mode de réalisation ou sa variante d'exécution.

Pour la commodité de l'exposé, on décrira successivement chacun des constituants de l'invention avant d'en exposer la construction et la mise en oeuvre éventuellement.

Dans ce qui suit, on décrit une douille en cuvette selon l'invention dans son application à un coussinet ou roulement radial à éléments roulants cylindriques pour un joint de cardan J qui comprend des mâchoires M avec des logements L destinés à recevoir des tourillons T d'un croisillon C.

Comme il est connu, le croisillon d'un tel cardan est monté dans chaque mâchoire à l'aide d'un coussinet ou roulement radial à éléments roulants cylindriques R, rouleaux ou aiguilles, interposé entre chaque tourillon et le logement ou alésage de la mâchoire correspondante.

Un tel coussinet ou roulement comprend, essentiellement, une douille en cuvette fermée faite d'un corps latéral 10 et d'un fond 20.

Le corps 10 comprend une paroi extérieure 101 destinée à être engagée dans un logement ou alésage L d'une mâchoire M et une paroi intérieure 102 destinée à servir de chemin de roulement extérieur à des éléments roulants cylindriques R tels que des aiguilles ou des rouleaux. Le chemin de roulement intérieur de ces éléments roulants est habituellement constitué directement par la surface extérieure S du tourillon.

De préférence, le corps 10 présente à son extrémité opposée au fond 20 un rebord 11 radial centripète. Ce rebord permet de retenir axialement les éléments roulants dans la douille.

Le fond 20 est muni d'une nervure 21 périphérique annulaire proche du corps et d'un appui 22 central disposé de manière à se trouver sur l'axe du tourillon. Cet appui central 22 a une face 221 extérieure en retrait ou en dépression par rapport à l'extérieur, et une face 222 intérieure en saillie ou en dôme vers l'intérieur, comme illustré.

Comme il est classique, une telle douille est faite en tôle métallique mince qui est mise en forme par toute technique classique par exemple d'emboutissage et de roulage et qui est traitée par exemple par cémentation ou par carbonitruration afin de lui conférer la dureté requise. On ne s'y étendra pas plus longuement.

Selon l'invention, cette douille présente une couronne 23 intermédiaire qui est située entre la nervure 21 et l'appui 22 et qui a subi un recuit localisé afin d'y créer un gradient de dureté.

Comme on le voit, la face intérieure 222 en saillie en dôme présente un plateau 223 sommital qui, de préférence, n'est pas lisse et est par exemple strié, gaufré ou autrement configuré. Cette zone gaufrée ou alvéolée est destinée à servir de réserve de lubrifiant.

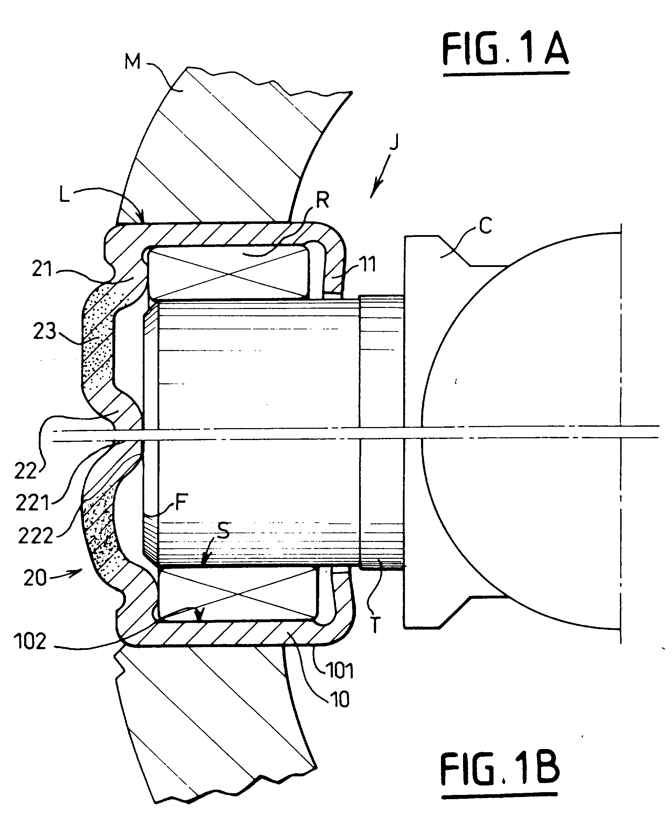

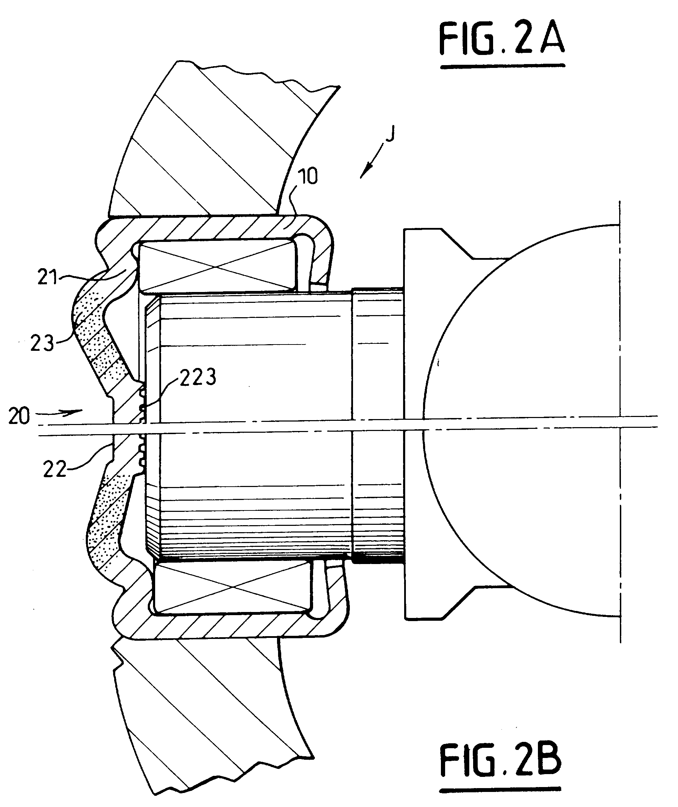

Selon l'invention qu'il soit lisse (Figure 1) ou qu'il ne soit pas lisse (Figure 2), le plateau sommital 223 de la face intérieure 222 en dôme de l'appui central 22 reste traîté et conserve une certaine dureté et de préférence sa dureté initiale d'avant le recuit.

Selon une variante d'exécution, la face extérieure 221 de l'appui central 22 est recuite superficiellement pour former en quelque sorte une pastille qui, s'il y a lieu, rejoint radialement la couronne intermédiaire 23 elle aussi recuite. On comprend donc que l'appui central reste traité au moins partiellement.

La mise en place d'une telle douille se fait à l'aide d'un poinçon creux, avec un dégagement central, qui prend appui sur la nervure 21 qui sert d'épaulement. On enfonce alors la douille avec tout ce dont elle est munie, par exemple les éléments roulants éventuellement retenus par une cage, pour que la face intérieure 222 en dôme prenne appui sur la tranche F d'extrémité du tourillon. Du fait de la présence de la couronne intermédiaire recuite, le fond de la douille fléchit en partie de manière permanente et ceci permet d'assurer la précontrainte finale en observant que l'appui central, lui, ne se déforme pas car étant ou restant traité au moins vers l'intérieur.

On choisit pour matériau de la douille une tôle en ST4 (norme DIN) ou en F14 (norme AFNOR) et on adopte par exemple pour les parties traitées une dureté minimale en surface de 500 HV et de préférence de l'ordre de 710 à 810 HV, et pour les parties recuites une dureté d'environ 450 HV5.

On notera que grâce au gradient de dureté ainsi créé, on obtient une déformation plastique avec un fluage local du fond dont la limite élastique est dépassée et dont le recuit abaisse la valeur et retarde l'apparition éventuelle de criques.

Tout déplacement axial éventuel du tourillon relativement à la mâchoire est pratiquement éliminé par l'existence de la précontrainte et de la rigidité ainsi obtenues.

On notera aussi que la face intérieure du plateau sommital de l'appui central qui repose contre la tranche d'extrémité d'un tourillon, est traitée ce qui évite ou retarde son usure au cours du fonctionnement.

La configuration de l'outil est telle, qu'en fin de course, il assure le sertissage, si besoin est, de la douille dans la mâchoire, comme il est classique et illustré.

On voit donc que grâce à l'invention, on a pu s'affranchir de l'utilisation d'une pièce intermédiaire entre le fond de la douille et la tranche du tourillon du croisillon, tout en opérant dans des conditions industrielles qui permettent d'obtenir une précontrainte sans avoir recours à des usinages précis et une mise en oeuvre délicate à l'aide d'un outillage spécifique.

On comprend tout l'intérêt de l'invention, en particulier pour les joints de cardan utilisés notamment pour les colonnes de direction d'automobiles.

## Revendications

1. Douille en cuvette métallique traitée pour roulement radial à éléments roulants cylindriques constituée d'un corps (10) avec une paroi extérieure (101) destinée à être placée dans un logement et une paroi intérieure (102) destinée à servir de chemin de routement extérieur à des éléments roulants ainsi que d'un fond (20) muni d'une nervure (21) périphérique annulaire et d'un appui (22) central avec une face extérieure (221) en retrait et une face intérieure (222) en saillie ainsi que d'une couronne (23) intermédiaire qui est située entre la nervure (21) et l'appui (22), douille caractérisée en ce que cette couronne (23) est recuite localement d'une telle manière que la face intérieure (222) de l'appui central (22) reste traitée.

2. Douille selon la revendication 1, caractérisée en ce que la face intérieure (222) présente un plateau (223) sommital traité au moins partiellement non recuit.

3. Douille selon la revendication 2, caractérisée en ce que le plateau sommital (223) est non lisse.

4. Douille selon la revendication 3, caractérisée en ce que le plateau sommital (223) est gaufré.

5. Douille selon l'une quelconque des revendications 1 à 4, caractérisée en ce que la face extérieure (221) en retrait est recuite superficiellement.

6. Douille selon la revendication 5, caractérisée en ce que la face extérieure (221) en retrait est recuite superficiellement pour former une pastille centrale qui rejoint radialement la couronne intermédiaire (23).

7. Douille selon l'une quelconque des revendications 1 à 6, caractérisée en ce qu'elle est traitée par cémentation voire par carbonitruration.

8. Douille conforme à l'une quelconque des revendications 1 à 7, caractérisée en ce que le corps (10) présente à son extrémité opposée au fond (20) un rebord (11) radial centripète.

9. Application d'une douille conforme à l'une quelconque des revendications 1 à 8, caractérisée en ce qu'elle est utilisée pour le montage des croisillons dans les mâchoires des joints de cardan.

10. Application selon la revendication 9, caractérisée en ce que ce joint de cardan est un joint de direction d'automobile.

## Claims

1. Treated metal closed sleeve for a radial bearing having cylindrical roller elements, consisting of a body (10) with an outer wall (101) adapted to be placed in a recess and an inner wall (102) adapted to act as an outer raceway for roller elements as well as a base (20) provided with an annular peripheral rib (21) and a central support (22) with a recessed outer surface (221) and a projecting inner surface (222) and an intermediate crown (23) which is located between the rib (21) and the support (22), said sleeve being characterised in that said crown (23) is locally annealed in such a way that the inner surface (222) of the central support (22) remains treated.

2. Sleeve according to claim 1, characterised in that the inner surface (222) has a surmounting plateau (223) which is at least partially treated but not annealed.

3. Sleeve according to claim 2, characterised in that the surmounting plateau (223) is not smooth.

4. Sleeve according to claim 3, characterised in that the surmounting plateau (223) is embossed.

5. Sleeve according to any one of claims 1 to 4, characterised in that the recessed outer surface (221) is superficially annealed.

6. Sleeve according to claim 5, characterised in that the recessed outer surface (221) is superficially annealed to form a central tab which is radially attached to the intermediate crown (23).

7. Sleeve according to any one of claims 1 to 6, characterised in that it is treated by cementation, specifically by carbonitriding.

8. Sleeve according to any one of claims 1 to 7, characterised in that the body (10) has a centripetal radial rim (11) at its end opposite the base (20).

9. Use of a sleeve according to any one of claims 1 to 8, characterised in that it is used for assembling crosspieces in the jaws of universal joints.

10. Use according to claim 9, characterised in that this universal joint is a vehicle steering joint.

## Patentansprüche

1. Napfförmige behandelte Buchse aus Metall für Radiallager mit zylindrischen Wälzelementen, bestehend aus einem Körper (10) mit einer Außenwand (101), die dazu bestimmt ist, in eine Aufnahme eingesetzt zu werden, und einer Innenwand (102), die dazu bestimmt ist, als Außenlaufbahn für Wälzelemente zu dienen, sowie aus einem Boden (20), der mit einer ringförmigen Umfangsrippe (21) und einer zentralen Auflage (22) mit einer zurückversetzten Außenseite (221) und einer hervorspringenden Innenseite (222) sowie mit einem zwischen der Rippe (21) und der Auflage (22) gelegenen Zwischenkranz (23) versehen ist, dadurch gekennzeichnet, daß dieser Kranz (23) örtlich auf eine solche Weise geglüht ist, daß die Innenseite (222) der zentralen Auflage (22) behandelt bleibt.

2. Buchse nach Anspruch 1, dadurch gekennzeichnet, daß die Innenseite (222) eine mindestens teilweise behandelte, nicht geglühte Scheitelscheibe (223) aufweist.

3. Buchse nach Anspruch 2, dadurch gekennzeichnet, daß die Scheitelscheibe (223) nicht glatt ist.

4. Buchse nach Anspruch 3, dadurch gekennzeichnet, daß die Scheitelscheibe (223) geprägt ist.

5. Buchse nach einem der Ansprüche 1 bis 4, dadurch gekennzeichnet, daß die zurückversetzte Außenseite (221) oberflächlich geglüht ist.

6. Buchse nach Anspruch 5, dadurch gekennzeichnet, daß die zurückversetzte Außenseite (221) oberflächlich geglüht ist, um ein zentrales Plättchen zu bilden, das radial an den Zwischenkranz (23) anschließt.

7. Buchse nach einem der Ansprüche 1 bis 6, dadurch gekennzeichnet, daß sie durch Einsatzhärten oder Karbonitrieren behandelt ist.

8. Buchse nach einem der Ansprüche 1 bis 7, dadurch gekennzeichnet, daß der Körper (10) an seinem dem Boden (20) entgegengesetzten Ende einen radialen, zentripetalen abgewinkelten Rand (11) aufweist.

9. Anwendung einer Buchse gemäß einem der Ansprüche 1 bis 8, dadurch gekennzeichnet, daß sie für die Montage der Kreuzstücke in den Backen von Kardangelenken verwendet wird.

10. Anwendung nach Anspruch 9, dadurch gekennzeichnet, daß dieses Kardangelenk ein Kraftfahrzeuglenkungs-Gelenk ist.
